# EUROPEAN PATENT APPLICATION

(11) **EP 1 783 662 A1**
(43) Date of publication of application: **09.05.2007**
(21) Application number: 06253044.9
(22) Date of filing: 13.06.2006
(51) Int. Cl.: G06K 9/03, G06K 9/00

(54) **Method of processing misoriented document items in an image-based check processing system**

(30) Priority: 03.11.2005 US 265806
(71) Applicant: NCR International, Inc., Dayton, Ohio 45479 (US)
(72) Inventor: Franklin, Lianne, Waterloo Ontario N2K 3R1 (CA); Franklin, Gene R., Waterloo Ontario N2K 3R1 (CA)
(74) Representative: Williamson, Brian

(57) **Abstract**

A method is provided of operating a check processing apparatus having a document feed path, a number of check processing devices disposed along the document feed path, and a number of pockets disposed at one end of the document feed path. The method comprises attempting to read a magnetic ink character recognition (MICR) codeline of a document item as the document item is transported along the document feed path, capturing image data which is representative of an image of the document item as the document item is transported along the document feed path, attempting at least once to read a MICR codeline from the image of the document item, and transporting the document item to a non-reject pocket when a MICR codeline is unable to be read from the document item transported along the document feed path and a MICR codeline is able to be read from the image of the document item.

## Description

The present invention relates to processing document items in an image-based check processing system, and is particularly directed to a method of processing misoriented document items in an image-based check processing system.

A typical image-based check processing system includes a check processing transport which has a document track and a number of check processing modules positioned along the document track for performing specific document processing operations on document items including checks moving downstream along the document track. The check processing system also includes a transport processor which executes a transport application program which is stored in memory to control operation of devices contained within the check processing modules positioned along the document track and thereby to control operation of the check processing transport.

A typical check processing transport includes a hopper into which a stack of document items is placed. An operator initially prepares the document items (e.g., orienting document items properly (forwards and right-side up), removing staples, removing paper clips, straightening bent corners, and the like) before they are placed into the hopper. A document feeder adjacent the hopper selectively feeds or drives each document item from the stack of document items in the hopper to transport the document item from the upstream end to the downstream end along the document track past an image capture device and a magnetic ink character recognition (MICR) reader. The image capture device captures an image of the front of the document item and an image of the back of the document item. The MICR reader reads a codeline from each document item. The document items are eventually transported to sorting pockets of a pocket device located at the downstream end of the document track. The pockets receive document items which have been sorted based upon the particular transport application program.

From time to time, a document item is misoriented in the hopper. This may have occurred, for example, due to an oversight while the document item was being prepared and placed into the hopper. An indication of a possibly misoriented document item having been placed into the hopper is when the MICR reader is unable to read a codeline from the document item as the document item is transported past the MICR reader. In known check processing applications, this possibly misoriented document item is transported to a pocket designated as a reject pocket. Document items in the reject pocket are reprocessed in a known manner. The reprocessing of such rejected document items is time-consuming and costly. It would be desirable to reduce the number of document items being transported to the reject pocket during operation of the check processing transport and thereby to reduce costs.

In accordance with an embodiment of the present invention, a method is provided of operating a check processing apparatus having a document feed path, a number of check processing devices disposed along the document feed path, and a number of pockets disposed at one end of the document feed path. The method comprises attempting to read a magnetic ink character recognition (MICR) codeline of a document item as the document item is transported along the document feed path, capturing image data which is representative of an image of the document item as the document item is transported along the document feed path, attempting at least once to read a MICR codeline from the image of the document item, and transporting the document item to a non-reject pocket when a MICR codeline is unable to be read from the document item transported along the document feed path and a MICR codeline is able to be read from the image of the document item.

In accordance with a second embodiment of the present invention there is provided a method of operating a check processing apparatus having a document feed path, a hopper disposed at one end of the document feed path, a number of check processing devices disposed along the document feed path, and a number of pockets disposed at the other end of the document feed path, the method comprising: attempting to read a magnetic ink character recognition (MICR) codeline of a document item as the document item is transported from the one end of the document feed path to the other end of the document feed path;
capturing image data which is representative of an image of the document item as the document item is transported from the one end of the document feed path to the other end of the document feed path; attempting at least once to read a MICR codeline from the image of the document item; and transporting the document item to a pocket which is other than a reject pocket when a MICR codeline is unable to be read from the document item transported along the document feed path and a MICR codeline is able to be read from the image of the document item.

In accordance with another embodiment of the present invention there is provided a method of operating a check processing apparatus having a document feed path, a number of check processing devices disposed along the document feed path, and a number of pockets disposed at one end of the document feed path, the method comprising the steps of: (a)
attempting to read a magnetic ink character recognition (MICR) codeline of a document item as the document item is transported along the document feed path; (b)
capturing image data which is representative of an image of the document item as the document item is transported along the document feed path; (c) attempting at least once to read a MICR codeline from the image of the document item of step (b); (d)determining if the document item is misoriented along the document feed path based upon the attempted readings of steps (a) and (c); (e) determining if a misoriented document item from step (d) is to be transported to a non-reject pocket; and (f) transporting the document item to a non-reject pocket if the determination in step (e) is affirmative.

Embodiments of the present invention will now be described, by way of example, with reference to the accompanying drawings, in which:
Fig. 1 is a schematic block representation of an image-based check processing system embodying the present invention;
Fig. 2 is a detailed view of different types of pockets of a pocket device shown in the image-based check processing system of Fig. 1; and
Fig. 3 is a flowchart depicting operation of the image-based check processing system of Fig. 1.

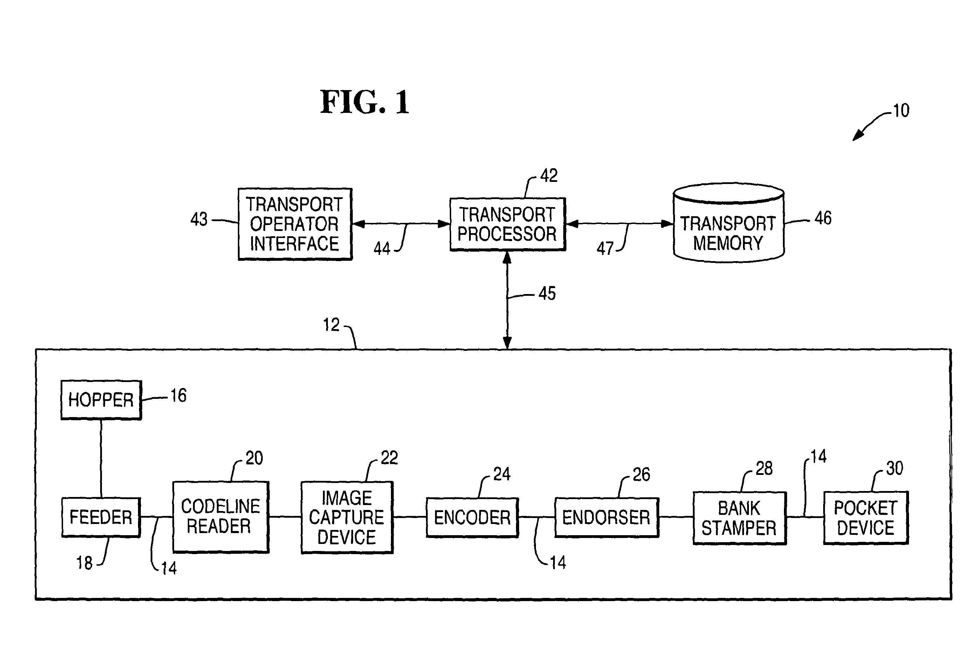

The present invention is directed to a method of processing misoriented document items in an image-based check processing system, such as shown in Fig. 1, and designated with reference numeral 10. The specific construction and use of the image-based check processing system 10 may vary. The check processing system 10 may be, for example, a sorting machine or a proof machine wherein financial document items are processed in a bank. The financial document items may be in any number of forms. For examples, a financial document item may be in the form of a check, a deposit slip, a cash-in slip, or a cash-out slip.

The check processing system 10 includes a check processing transport 12 having a document track 14 along which financial document items, such as checks, can be transported from an upstream end to a downstream end. The transport 12 includes a number of different check processing modules positioned along the document track 14. Each check processing module includes a number of devices associated with the particular check processing module for performing specific document processing operations on document items moving along the document track. The transport 12 includes a hopper 16 into which a stack of financial document items including checks are placed. A document feeder 18 adjacent the hopper 16 selectively feeds or drives each document item from the stack of document items in the hopper to transport the document item from the upstream end to the downstream end along the document track 14.

The check processing system 10 also includes a codeline reader 20 such as a magnetic ink character recognition (MICR) reader located along the document track 14. The MICR reader 20 reads a MICR codeline from each check being processed in a known manner. Alternatively, the codeline reader may be an OCR reader instead of a MICR reader depending upon the particular application. The check processing system 10 further includes an image capture device 22 located along the document track 14. The image capture device 22 captures images of the front and rear of each document item for a number of different purposes well known in the financial industry. More specifically, the image capture device 22 includes a front imaging camera and a rear imaging camera (both not shown) which are controlled to capture images of document items moving along the document track 14. The structure and operation of MICR readers, OCR readers, and imaging cameras are well known and, therefore, will not be described.

The check processing system 10 may optionally include an encoder 24, an endorser 26, or a bank stamper 28, as shown in Fig. 1. The encoder 24 encodes missing fields on each check. The endorser 26 applies an endorsement in a known manner to each check. The bank stamper 28 stamps each check to identify the bank institution processing the check. The structure and operation of encoders, endorsers, and bank stampers are well known and, therefore, will not be described.

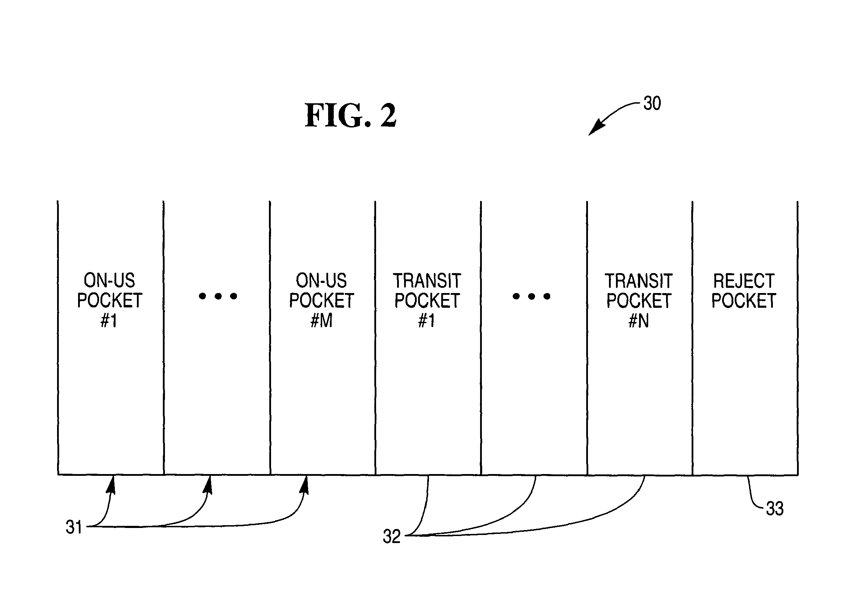

Referring to Figs. 1 and 2, the pocket device 30 includes a number of different types of pockets into which document items are pocketed. As an example, three types of pockets are shown in Fig. 2. The three types of pockets include on-us pockets 31, transit pockets 32, and a reject pocket 33. By way of example, there are "M" number of on-us pockets, and "N" number of transit pockets shown in Fig. 2. The structure and operation of the pockets 31, 32, 33 in the pocket device 30 are well known and, therefore, will not be described. Also, the functionality of the on-us pockets 31, the transit pockets 32, and the reject pocket 33 is well known and, therefore, will not be described.

The check processing system 10 further includes a transport processor 42 and a transport operator interface 43 which communicates via signals on line 44 with the transport processor. The operator interface 43 may include a keyboard, a mouse, and a display, all of which communicate via signals with the transport processor 42. The transport processor 42 controls operation of the transport 12 via signals on line 45. Suitable processors and memories are readily available in the marketplace. Their structure and operation are well known and, therefore, will not be described.

The check processing system 10 also includes a transport memory 46 which communicates via signals on line 47 with the transport processor 42. The memory 46 may comprise a single memory unit or a plurality of different memory units. An executable transport application program is stored in the memory 46. The transport application program is associated with a particular type of document processing work. For example, one type of work is proof of deposit. Another type of work is remittance processing. Still another type of work may be sorting of document items. When the transport application program is executed, the devices contained within the check processing modules lying along the document track 14 are controlled to process document items moving downstream along the document track in accordance with the transport application program, as is known. The memory 46 may store sequence numbers, MICR codelines, and image data associated with document items which have been processed in accordance with the transport application program. If applicable, the memory may also store encoder status, endorsement status, or bank stamp status.

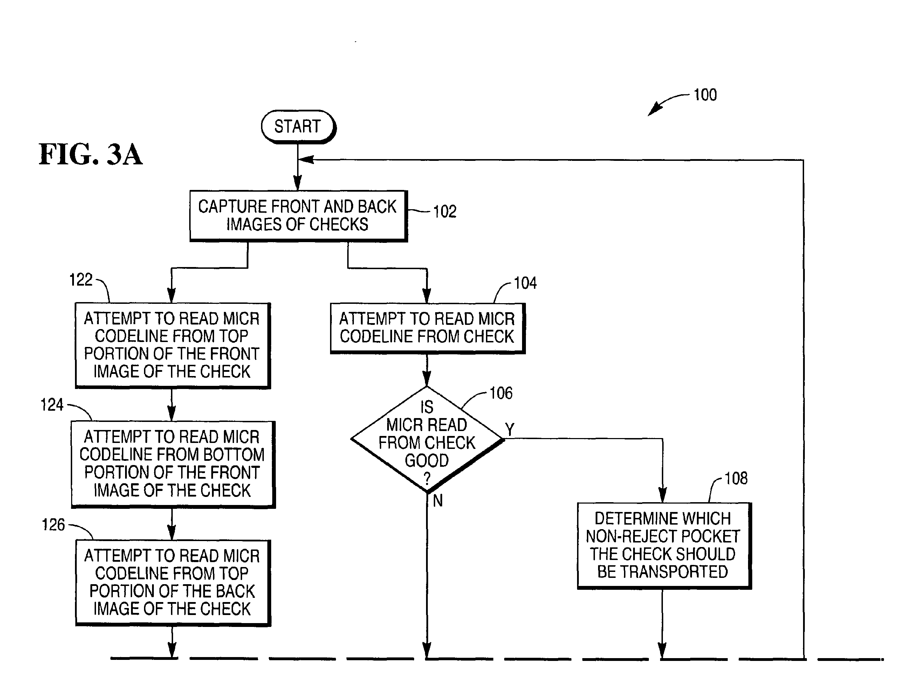

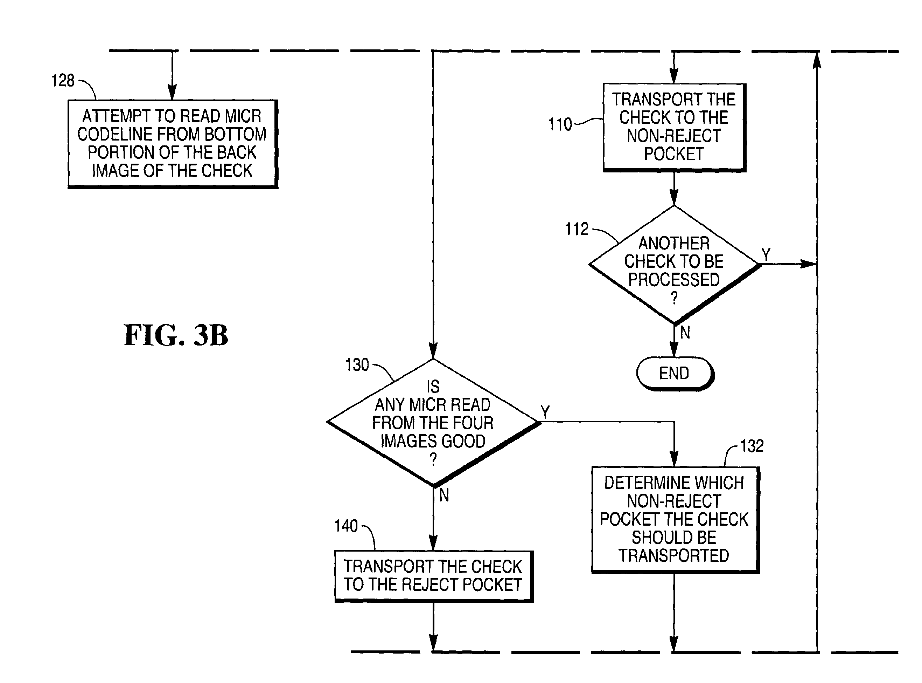

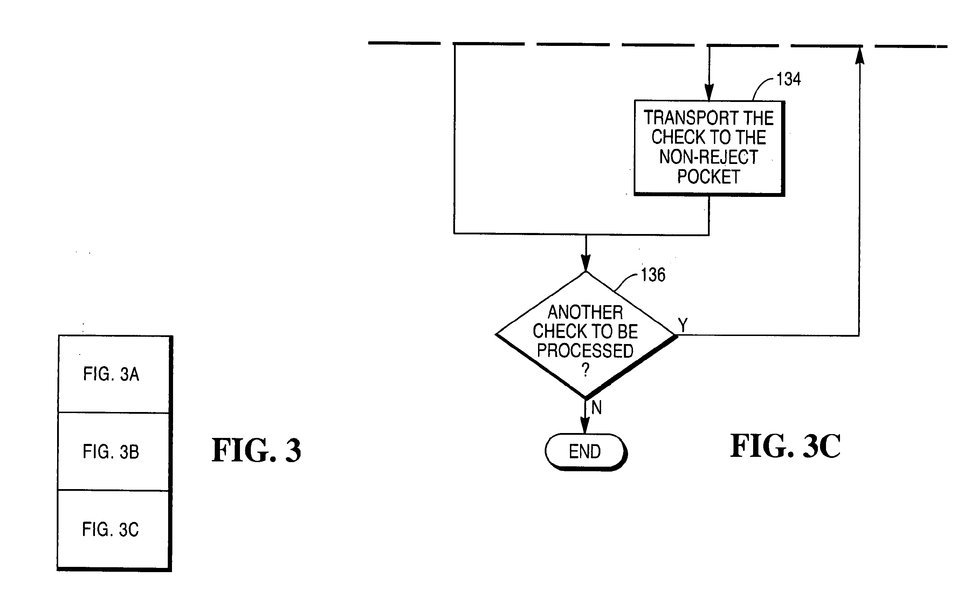

Referring to Fig. 3, a flowchart 100 depicts operation of the image-based check processing system 10 of Fig. 1. As a check is transported along the document track 14 past the image capture device 22, the front and the back of the check are imaged (step 102). The MICR reader 20 (or OCR reader, if applicable) makes an attempt to read a MICR codeline from the check as the check is transported past the MICR reader (step 104).

At the same time that the MICR reader 20 is making an attempt to read a MICR codeline from the check, an attempt is made to read a MICR codeline from the top portion of the front image of the check (step 122). An attempt is then made to read a MICR codeline from the bottom portion of the front image of the check (step 124). Further, an attempt is then made to read a MICR codeline from the top portion of the back image of the check (step 126). Also, an attempt is then made to read a MICR codeline from the bottom portion of the back image of the check (step 128).

The attempted read of step 104 is performed in parallel with the four attempted reads of steps 122, 124, 126, 128. Typically, a total of at least two processors are needed in the check processing system 10 to accomplish this parallel processing. The four attempted reads of steps 122, 124, 126, 128 may be implemented via either software or hardware. For example, if a read attempt is implemented in software, such a read attempt may be in the form of a multi-line OCR read from the image. It should be noted that the process of reading a codeline from an image is sometimes referred to as "multi-line OCR", as is known.

A determination is made (step 106) as to whether the read of a MICR codeline from the check in step 104 is of sufficient quality. If the determination in step 106 is affirmative, a determination is made (step 108) as to which non-reject pocket (i.e., either one of the on-us pockets 31 or one of the transit pockets 32) the check should be pocketed. The check is then transported to that non-reject pocket (step 110). A determination is made (step 112) as to whether there is another check to be processed. If the determination in step 112 is affirmative, the program returns to step 102 to process the next check. Otherwise, the program ends.

However, if the determination in step 106 is negative, then the program proceeds to step 130. In step 130, a determination is made as to whether any of the four codeline read attempts from steps 122, 124, 126, 128 is successful. If the determination in step 130 is affirmative, a determination is made (step 132) as to which non-reject pocket (i.e., either one of the on-us pockets 31 or one of the transit pockets 32) the check should be pocketed. The check is then transported to that non-reject pocket (step 134). A determination is made (step 136) as to whether there is another check to be processed. If the determination in step 136 is affirmative, the program returns to step 102 to process the next check. Otherwise, the program ends.

However, if the determination in step 130 is negative, the check is transported to the reject pocket 33. The check is transported to the reject pocket 33 because the MICR reader 20 was unable to read a codeline from the physical check, and each of the four different attempts in steps 122, 124, 126, 128 was unsuccessful in reading a codeline from the front and back images of the check.

It should be apparent that a pocketing decision is being made as the check is moving along the check feed path 14 towards the downstream end in the pocketing area of the pocket device 30. The pocketing decision must be made before the check reaches the pocketing area. Accordingly, there is a time limit (typically in numbers of milliseconds) in making a pocketing decision. If the pocketing decision cannot be made within this time limit, the check must be diverted and transported to the reject pocket 33.

Although the above description describes the four attempted reads of steps 122, 124, 126, 128 as being performed in series relative to each other, it is conceivable that steps 122, 124, 126, 128 may be performed in parallel relative to each other. If this is the case, then typically a total of at least five processors are needed in the check processing system 10 since the four steps 122, 124, 126, 128 are also performed in parallel with step 104. Also, it is conceivable that some of the four steps 122, 124, 126, 128 may be performed in series and some may be performed in parallel. As an example, step 124 may be performed in series with and after step 122, step 128 may be performed in series with and after step 126, and steps 122, 126 may be performed in parallel relative to each other. If this is the case, then typically a total of at least three processors are needed in the check processing system 10 to accomplish this combination of series and parallel processing.

Also, although the above description describes four attempted reads in steps 122, 124, 126, 128, it is conceivable that more than four attempted reads be made or less than four attempted reads be made on the image of the check. For example, only one read such as that shown in step 122 may be made on the image of the check. Moreover, although the above description describes multiple processors (i.e., more than one processor) as being needed to perform the attempted read of step 104 in parallel with at least one of the attempted reads of steps 122, 124, 126, 128, it is conceivable that only one processor be used if the single processor is sufficiently fast enough to make a pocketing decision before the check reaches the pocketing area of the pocket device 30.

It should also be apparent that a check is not being diverted into the reject pocket 33 even though the document item may be misoriented as the check is being transported along the document track 14. The possibly misoriented check is transported into a non-reject pocket (i.e., either one of the on-us pockets 31 or one of the transit pockets 32). Accordingly, the number of document items which are actually diverted into the reject pocket 33 is reduced. This results in cost savings during operation of the check processing system 10.

It should be noted that Check 21 legislation allows banks to truncate checks which are transit items. Since a bank (such as a collecting bank) is allowed to truncate checks which are transit items, no physical checks need to be sent from the collecting bank to paying banks. Accordingly, it does not matter to the collecting bank if misoriented checks are transported into transit pockets associated with these paying banks because the physical checks in the transit pockets are not required to be sent to the paying banks. Moreover, since it does not matter if checks are misoriented as they are placed into a hopper of a check processing transport, less time is needed to prepare document items before they are placed into the hopper. This results in cost savings.

The particular arrangements disclosed are meant to illustrative only and not limiting as to the scope of the invention. From the above description, those skilled in the art to which the present invention relates will perceive improvements, changes and modifications. Numerous substitutions and modifications can be undertaken without departing from the scope of the invention. Such improvements, changes and modifications within the skill of the art to which the present invention relates are intended to be covered by the appended claims.

## Claims

1. A method of operating a check processing apparatus having a document feed path, a number of check processing devices disposed along the document feed path; and a number of pockets disposed at one end of the document feed path, the method comprising:
attempting to read a magnetic ink character recognition (MICR) codeline of a document item as the document item is transported along the document feed path;
capturing image data which is representative of an image of the document item as the document item is transported along the document feed path;
attempting at least once to read a MICR codeline from the image of the document item; and
transporting the document item to a non-reject pocket when a MICR codeline is unable to be read from the document item transported along the document feed path and a MICR codeline is able to be read from the image of the document item.

2. A method according to claim 1, wherein the non-reject pocket comprises a transit pocket.

3. A method according to claim 1, wherein the non-reject pocket comprises an on-us pocket.

4. A method according to claim 1, wherein the method includes the step of attempting to read a magnetic ink character recognition (MICR) codeline of a document item as the document item is transported from the one end of the document feed path to the other end of the document feed path.
